# DEMANDE DE BREVET EUROPEEN

(11) **EP 0 882 671 A1**
(43) Date de publication de la demande: **09.12.1998**
(21) Numéro de dépôt: 98401292.2
(22) Date de dépôt: 29.05.1998
(51) Int. Cl.: C01B 25/455

(54) **Procédé de fabrication d'hexafluorophosphate de lithium**

(30) Priorité: 06.06.1997 FR 9707030; 04.07.1997 FR 9708521
(71) Demandeur: ELF ATOCHEM S.A., 92800 Puteaux, Hauts-de-Seine (FR)
(72) Inventeur: Bonnet, Philippe, 69007 Lyon (FR); Perdrieux, Sylvain, 69390 Charly (FR); Schon, Steven, Strafford, Pennsylvania 19087 (US)
(74) Mandataire: Kaplan, Jean-Pierre

(57) **Abrégé**

Le procédé de la présente invention consiste à mettre en contact, d'une part, (A) du pentafluorure de phosphore gazeux ou un mélange gazeux comprenant du pentafluorure de phosphore et de l'acide chlorhydrique, et, d'autre part, (B) une solution de fluorure de lithium dans l'acide fluorhydrique, dans une colonne (10) présentant un nombre d'unités de transfert suffisant pour réaliser la réaction du PF5 avec LiF dans les conditions choisies de température, de pression et de rapport molaire des deux réactifs en présence, et avec absorption totale ou sensiblement totale du PF5 au sein de la colonne. Ce procédé permet de résoudre les problèmes de bouchage en empêchant les recristallisations de sels; d'évacuer les calories dégagées par la réaction par la vaporisation d'une partie de l'HF; de séparer l'HCl éventuellement contenu dans le PF₅ de départ, sans perte de PF₅, ce qui autorise un traitement ultérieur de récupération/valorisation de cet HCI. Ce procédé est par ailleurs très simple, avec un nombre d'étapes minimal, ce qui permet d'éviter toute entrée d'air ou d'humidité susceptibles de polluer le LiPF₆ final.

## Description

La présente invention concerne un procédé permettant de fabriquer efficacement l'hexafluorophosphate de lithium (LiPF₆), produit utilisable en tant qu'électrolyte dans les piles au lithium. On a largement utilisé dans le passé, pour cette application, le perchlorate de lithium, mais ce produit s'est avéré dangereux. L'hexafluorophosphate de lithium, qui présente d'excellentes propriétés à la fois applicatives et environnementales, se présente comme un indispensable substitut dans la fabrication des piles au lithium.

Bon nombre de brevets et publications trouvés dans la littérature, qui traitent globalement de la fabrication de LiPF₆, ne s'intéressent qu'à la synthèse du pentafluorure de phosphore (PF₅), sans développer aucunement la méthode utilisée pour faire réagir ce produit avec le fluorure de lithium (LiF). Ainsi, le brevet JP-41 75 216 propose essentiellement une méthode de préparation de PF₅ sans métaux, sans ions SO₄²⁻ et sans produits lourds ; le brevet JP-52 79 003 vise à produire du PF₅ débarrassé de l'impureté POF₃ ; le brevet JP-65 6 413 vise à produire du PF₅ sans PF₃Cl₂ ; la demande de brevet allemand DE-A-196 14 503 propose également une méthode pour accéder à un PF₅ plus pur.

Les autres brevets et publications, qui développent de façon plus détaillée un procédé de synthèse du LiPF₆ lui-même proposent généralement des méthodes complexes, peu industrielles et propices à l'introduction d'impuretés. Ainsi, par exemple, le brevet américain US-A-3 594 402 propose une méthode de préparation et/ou de purification du LiPF₆ passant par l'intermédiaire d'un complexe entre l'acétonitrile et le LiPF₆ ; le brevet américain US-A-3 607 200 propose de réaliser la réaction entre LiF solide et PF₅ gazeux dans un solvant organique dans lequel le LiF est insoluble, le PF₅ est soluble et le LiPF₆ est "raisonnablement" soluble ; le brevet japonais JP-60 251 109 propose de faire réagir directement le PCl₅ solide avec un sel de lithium en solution dans l'HF ; le brevet japonais JP-64 72 901 propose une méthode permettant de rendre le LiF solide poreux, puis de le faire réagir avec du PF₅ gazeux.

Toutes ces méthodes sont très complexes à industrialiser car elles mettent en oeuvre des procédés comportant de multiples étapes et/ou impliquant des réactions solides/gaz ou solides/liquides, et/ou nécessitant l'usage de solvants organiques intermédiaires.

Les exigences de qualité requises par le marché du LiPF₆ impliquent que le procédé mis en oeuvre soit le plus simple possible, c'est-à-dire minimise le nombre d'opérations unitaires, et qu'il évite les manipulations directes de solides et les ouvertures de circuit correspondantes : ceci notamment dans le but d'éviter les entrées d'air et d'humidité dans le procédé, susceptibles de générer des impuretés oxygénées hydrolysables incompatibles avec les spécifications de pureté désirées pour le LiPF₆ final.

Recherchant donc une méthode permettant d'obtenir de façon simple le LiPF₆, la Société déposante a envisagé, pour cette synthèse, de mettre en contact et de faire réagir du PF₅ gazeux avec du LiF préalablement mis en solution dans l'HF. Cependant, cette mise en contact pose plusieurs problèmes pratiques :
- tout d'abord, le simple barbotage de PF₅ dans une solution de LiF + HF conduit inévitablement à des bouchages, phénomène non mentionné dans la littérature : cela s'explique par la rapidité de la réaction de formation de LiPF₆ d'une part et par les solubilités limitées du LiF et du LiPF₆ dans l'HF d'autre part ;
- ensuite, la réaction est rapide et exothermique : il convient donc de prendre des mesures pour contrôler l'élévation de température du milieu, afin d'éviter soit une vaporisation excessive de l'HF qui se traduirait alors immédiatement par une recristallisation des sels de lithium et donc par des bouchages, soit une surchauffe préjudiciable à la sécurité de l'installation et à la stabilité du LiPF₆ formé.

Par ailleurs, parmi les méthodes les plus économiques pour accéder au PF₅, se trouvent naturellement celles partant des matières premières les moins chères que sont le PCl₃ ou le PCl₅. Le PF₅ ainsi formé est alors accompagné d'HCl. Ayant étudié les équilibres HF/PF₅/HCl, la Société déposante a montré qu'il était impossible de séparer de façon simple l'HCl du PF₅ ; pour l'étape de synthèse du LiPF₆, il faut donc mettre en oeuvre une méthode compatible avec la présence de cet HCI, autrement dit pouvant partir d'un PF₅ brut issu d'une réaction mettant en oeuvre du PCl₃ ou du PCl₅.

La Société déposante a maintenant démontré qu'il était possible de générer de façon continue et fiable du LiPF₆ en mettant en contact, dans une colonne présentant un nombre d'unités de transfert suffisant, d'une part le gaz PF₅ seul ou accompagné d'HCl (PF₅ brut issu d'une réaction mettant en oeuvre PCl₃ ou PCl₅), et d'autre part une solution de LiF dans l'HF.

Ce procédé apporte une solution simple à l'ensemble des problèmes exposés ci-dessus. Les difficultés posées par la mise en contact du PF₅ avec le LiF sont évitées, car les configurations réactionnelles pouvant être proposées sur la base du procédé de l'invention permettent notamment d'absorber l'exothermicité de la réaction, la vaporisation d'une partie de l'HF permettant d'évacuer les calories dégagées par le réaction, et d'éviter les bouchages créés par des recristallisations intempestives de sels.

Egalement, le procédé selon la présente invention est simple, se différenciant donc très nettement de toutes les méthodes complexes proposées jusqu'ici, mettant en oeuvre soit des réactions solides/gaz ou solides/liquides, soit l'usage de solvants organiques intermédiaires.

En même temps, le procédé selon la présente invention permet, de façon tout à fait inattendue, d'utiliser avantageusement du PF₅ brut, accompagné d'HCl, car il a été démontré qu'il était possible - ce qui n'était pas évident a priori - d'absorber complètement le PF₅ sans aucune perte dans le flux d'HCl s'échappant du système réactionnel , et ceci sans aucun bouchage et avec un profil de température parfaitement contrôlé. Cette séparation de l'HCl, contenu dans ce cas dans le PF₅ de départ, sans perte de PF₅, autorise un traitement ultérieur aisé pour la récupération/valorisation de cet HCl, car, selon la présente invention, celui-ci est quasiment pur et complètement débarrassé de PF₅.

Enfin, en minimisant le nombre d'étapes de procédé, on évite toute entrée d'air ou d'humidité susceptible de polluer le LiPF₆ final, lequel est donc obtenu avec une haute pureté.

La présente invention a donc pour objet un procédé de fabrication de l'hexafluorophosphate de lithium, par réaction du pentafluorure de phosphore avec le fluorure de lithium, caractérisé par le fait que l'on met en contact, d'une part, (A) du pentafluorure de phosphore gazeux ou un mélange gazeux comprenant du pentafluorure de phosphore et de l'acide chlorhydrique, et, d'autre part, (B) une solution de fluorure de lithium dans l'acide fluorhydrique, dans une colonne présentant un nombre d'unités de transfert suffisant pour réaliser la réaction du pentafluorure de phosphore avec le fluorure de lithium dans les conditions choisies de température, de pression et de rapport molaire des deux réactifs en présence, et avec absorption totale ou sensiblement totale du pentafluorure de phosphore au sein de la colonne.

Comme cela apparaîtra à l'homme du métier, le nombre d'unités de transfert nécessaires pour réaliser la réaction du PF₅ avec le LiF est fortement dépendant de la température, elle-même dépendant de la pression de travail. Ce nombre est également dépendant du rapport molaire PF₅/LiF. A titre d'exemple, lorsque la température est inférieure à 20 °C, le nombre d'unités de transfert se situe en général entre 2 et 20, et de préférence entre 4 et 10.

Le rapport molaire alimenté pentafluorure de phosphore / fluorure de lithium est généralement compris entre 0,6 et 1,2, et de préférence entre 1,05 et 1,15. On préfère mettre en oeuvre un léger excès de PF₅ par rapport à la stoechiométrie de la réaction afin de minimiser la présence de LiF dans LiPF₆.

La teneur en fluorure de lithium dans sa solution dans l'acide fluorhydrique d'alimentation (B) est en général choisie pour que la concentration en acide fluorhydrique en tout point de la colonne se situe au-dessus du seuil de solubilité des sels de fluorure de lithium et d'hexafluorophosphate de lithium, en tenant par ailleurs compte de la vaporisation d'une fraction de l'acide fluorhydrique par l'énergie dégagée par la réaction. La teneur pondérale en LiF est avantageusement comprise entre 2 et 6 %, et de préférence entre 3 et 5 %.

Par ailleurs, on conduit en général la réaction selon l'invention à une pression généralement comprise entre la pression atmosphérique et 3 MPa, et de préférence entre la pression atmosphérique et 2 MPa, et à une température généralement comprise entre -20 et 70°C, de préférence entre -10 et 40 °C. Toutefois, on ne sortirait pas de l'invention en mettant en oeuvre la réaction selon l'invention à des pressions inférieures à la pression atmosphérique.

On peut conduire la réaction selon l'invention dans des conditions adiabatiques, la colonne étant alors surmontée d'un condenseur destiné à recondenser et à rétrograder la partie de l'acide fluorhydrique vaporisée dans ladite colonne par suite de l'exothermicité de la réaction entre le pentafluorure de phosphore et le fluorure de lithium.

On peut aussi conduire la réaction selon l'invention dans des conditions isothermes, la colonne étant alors refroidie pour absorber l'exothermicité de la réaction.

Conformément à un premier mode de réalisation, on alimente la colonne à contre-courant, le courant gazeux (A) constitué par ou contenant le pentafluorure de phosphore étant introduit en pied de colonne et la solution de fluorure de lithium dans l'acide fluorhydrique (B) étant introduite en tête, l'hexafluorophosphate de lithium quittant la colonne en pied en solution dans l'acide fluorhydrique.

Conformément à un second mode de réalisation, on alimente la colonne à co-courant, le courant gazeux (A) constitué par ou contenant le pentafluorure de phosphore et la solution de fluorure de lithium dans l'acide fluorhydrique (B) étant introduits à la base de la colonne, laquelle fonctionne alors comme un réacteur-piston, la solution liquide obtenue d'hexafluorophosphate de lithium dans l'acide fluorhydrique étant séparée en tête de la colonne.

Conformément à un troisième mode de réalisation, on alimente la colonne à co-courant, le courant gazeux (A) constitué par ou contenant le pentafluorure de phosphore et la solution de fluorure de lithium dans l'acide fluorhydrique (B) étant introduits en tête de colonne, la solution liquide obtenue d'hexafluorophosphate de lithium dans l'acide fluorhydrique étant séparée dans un pot de désengagement monté sur la conduite de soutirage à la base de ladite colonne.

Selon une possibilité très intéressante de l'invention, on part d'un mélange gazeux obtenu comme produit brut de la fabrication de pentafluorure de phosphore à partir de trichlorure de phosphore ou de pentachlorure de phosphore et contenant en conséquence de l'acide chlorhydrique, du chlore et de l'acide fluorhydrique, l'acide chlorhydrique s'échappant alors dans l'évent, totalement ou sensiblement totalement débarrassé du pentafluorure de phosphore.

Conformément à la présente invention, pour obtenir le produit recherché à l'état pur, on peut aisément soumettre à une évaporation la solution obtenue d'hexafluorophosphate de lithium dans l'acide fluorhydrique, afin de cristalliser l'hexafluorophosphate de lithium, puis traiter la suspension de cristaux ainsi obtenue afin de purifier complètement le produit fini.

La colonne utilisée dans le procédé de l'invention peut être par exemple une colonne vide, à garnissage ou à plateaux.

Le procédé de l'invention est, par ailleurs, avantageusement conduit en continu.

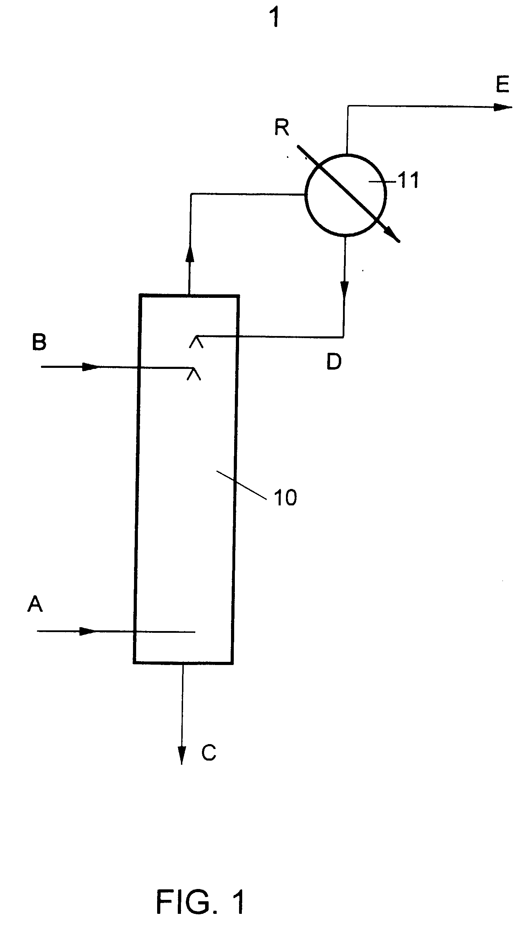

On va maintenant décrire plus en détail six configurations réactionnelles possibles pour la mise en oeuvre du procédé selon l'invention, sans considérer cette liste comme exhaustive, et avec référence aux Figures respectivement 1 à 6 qui sont les schémas de montage correspondants.
- Une première configuration réactionnelle, illustrée sur la Figure 1, consiste en une colonne 10 alimentée à contre-courant : en pied, on alimente le gaz (A), qui est formé par du PF₅ accompagné ou non d'HCl, tandis qu'en tête, on alimente la solution (B) LiF + HF. Le LiPF₆ produit quitte la colonne en pied, en solution dans l'HF (solution C).

Dans cette configuration adiabatique, la colonne 10 est surmontée d'un condenseur 11 parcouru par un réfrigérant (R): cet appareil sert à recondenser et à rétrograder la part de l'HF vaporisé dans la colonne 10 par suite de l'exothermicité de la réaction entre LiF et PF₅ (flux D). Dans le cas de l'utilisation d'un PF5 pur, en tête du condenseur 13, s'échappe un peu de HF (évent E). Dans le cas de l'utilisation d'un PF₅ brut, accompagné d'HCl, l'évent (E) en tête du condenseur 13 est formé par l'HCl qui entraîne un peu d'HF mais est généralement quasiment complètement débarrassé de PF₅. Cet HCI peut ensuite être envoyé vers une unité de traitement connue de l'homme du métier pour être défluoré et ainsi valorisé.

La colonne réactionnelle 10 est une colonne d'absorption qui peut être de n'importe quel type : vide, garnie ou à plateaux. Ses dimensions sont choisies pour permettre de réaliser un nombre d'unités de transfert suffisant pour que l'absorption et la réaction du PF₅ se fassent dans de bonnes conditions : ce nombre peut varier significativement selon les conditions de température et de concentrations.

La quantité d'HF introduite en tête de colonne, donc la concentration en LiF dans l'alimentation de tête, doit être telle que la concentration en HF en tout point de la colonne se situe au-dessus du seuil de solubilité des sels LiF et LiPF₆, et ceci en tenant compte de la vaporisation d'une fraction de l'HF par l'énergie dégagée par la réaction. Cela situe la teneur en LiF dans l'HF alimenté en tête de colonne en dessous de 6% en poids, et préférentiellement entre 3% et 5% en poids, en fonction du rapport PF₅/LiF alimenté.

On préfère en général travailler en léger excès de PF₅, de façon à consommer la totalité du LiF, et ainsi obtenir une solution HF + LiPF₆ dépourvue de LiF ; dans ces conditions, on trouvera quelques traces de PF₅ dans le flux gazeux sortant en tête de colonne.

Le profil de température dépend essentiellement de la pression à laquelle on opère la colonne. On cherche toutefois à limiter la température à moins de 70°C, sans que le maximum constitue une limite à l'invention : le seul souci ici est de favoriser la réaction et de ne pas redécomposer le LiPF₆ formé.

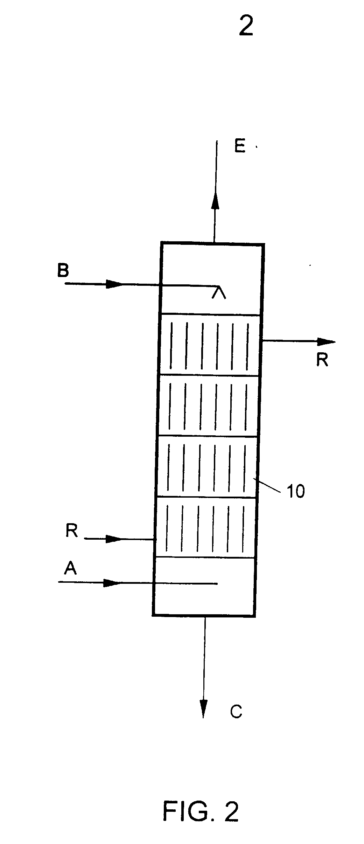

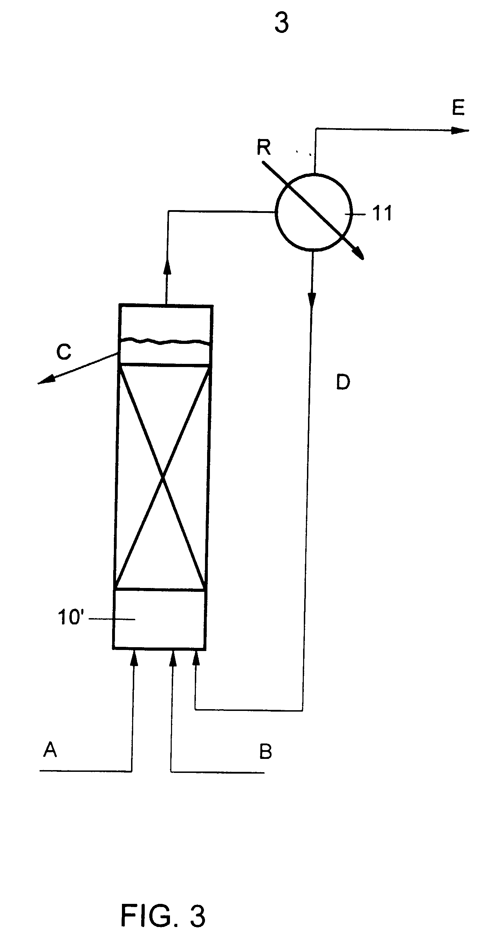

La solution de LiPF₆ dans l'HF obtenue en pied de colonne fait ensuite l'objet d'un traitement consistant à éliminer l'HF par évaporation afin de cristalliser le LiPF6, puis à traiter la suspension de cristaux ainsi obtenue, afin de complètement purifier le produit fini.
- Une deuxième configuration réactionnelle, illustrée sur la Figure 2, correspond à la variante isotherme du cas précédent : la colonne 10 est refroidie par quelque moyen que ce soit (double-enveloppe dans laquelle circule un réfrigérant (R), échangeur(s) incorporé(s)...) afin d'absorber l'exothermicité de la réaction. En dehors du fait qu'il n'est plus nécessaire de disposer d'un condenseur de tête, les recommandations faites à propos de la première configuration réactionnelle sont toutes valables.
- Une troisième configuration réactionnelle s'applique particulièrement bien au problème posé : il s'agit d'une colonne à co-courant 10', telle qu'illustrée à la Figure 3.

Les deux alimentations réactionnelles, à savoir (A) le PF₅ accompagné ou non d'HCl d'une part, et (B) la solution de LiF dans l'HF d'autre part, sont introduites à la base de la colonne 10'.

Dans ces conditions, la colonne 10', qui peut être vide, mais de préférence garnie, est utilisée comme un réacteur-piston au long duquel la réaction progresse. En tête de la colonne 10', on sépare la solution liquide (C) constituée de LiPF₆ + HF de la phase gaz constituée de la part d'HF vaporisée par l'exothermicité de la réaction accompagnée ou non d'HCl : un condenseur 11 permet de recondenser l'HF et de le recycler (flux D) à la base de la colonne 10', tandis que l'HCl éventuellement présent s'échappe en tête en entraînant un peu d'HF (flux E), mais généralement quasiment complètement débarrassé de PF₅. Cet HCI peut ensuite être envoyé vers une unité de traitement connue de l'homme du métier pour être défluoré et ainsi valorisé.

L'intérêt de cette configuration co-courant est, on l'a dit plus haut, de réaliser un réacteur de type piston: on sait que ce type de réacteur est généralement plus efficace que le réacteur agité en ceci qu'il requiert un temps de séjour plus faible pour atteindre un taux de conversion réactionnelle donné d'une part, et qu'il est généralement plus sélectif d'autre part. Dans le cas où la réaction concernée est exothermique, et où l'on n'accepte qu'une faible élévation de température, ce qui est le cas ici, le réacteur piston de type tubulaire est généralement impraticable du fait qu'il offre une trop faible surface d'échange pour évacuer convenablement les calories. L'astuce de la configuration proposée ici est de permettre l'évacuation des calories par vaporisation d'une fraction de l'HF, tout en maintenant le caractère piston : l'ensemble des flux allant de bas en haut (y compris l'HF vaporisé et l'HCl non réactif) d'une part, et la présence de garnissages appropriés d'autre part, permettent de maintenir un régime d'écoulement piston malgré les turbulences provoquées par l'ébullition d'une fraction de l'HF et par la présence d'une phase gazeuse.

Les garnissages utilisés dans cette configuration seront choisis de préférence parmi ceux qui favorisent les contacts gaz-liquide et le mélange radial tout en minimisant l'agitation axiale : on peut citer, sans que cela limite l'invention, des éléments de mélangeur statique en croix ou en hélice, par exemple.

Comme dans les configurations précédentes, la hauteur de la colonne doit être suffisante pour assurer une absorption et une réaction correctes du PF₅.

De même, la teneur en LiF dans la solution introduite devra être telle qu'en tout point de la colonne 10', il y ait toujours assez d'HF pour solubiliser les sels de lithium, et ceci en tenant compte de la vaporisation d'une fraction de l'HF par l'énergie dégagée par la réaction.

On préfèrera généralement travailler en léger excès de PF₅ et ainsi obtenir en tête une solution de LiPF₆ dans l'HF dépourvue de LiF : dans ces conditions, on trouvera quelques traces de PF₅ dans le flux gazeux sortant en tête de la colonne 10'.

Comme indiqué précédemment, le profil de température dépend essentiellement de la pression à laquelle on opère la colonne. On cherche toutefois à limiter la température à moins de 70°C, sans que ce maximum constitue une limite à l'invention, dans le but de favoriser la réaction et de ne pas redécomposer le LiPF₆ formé.

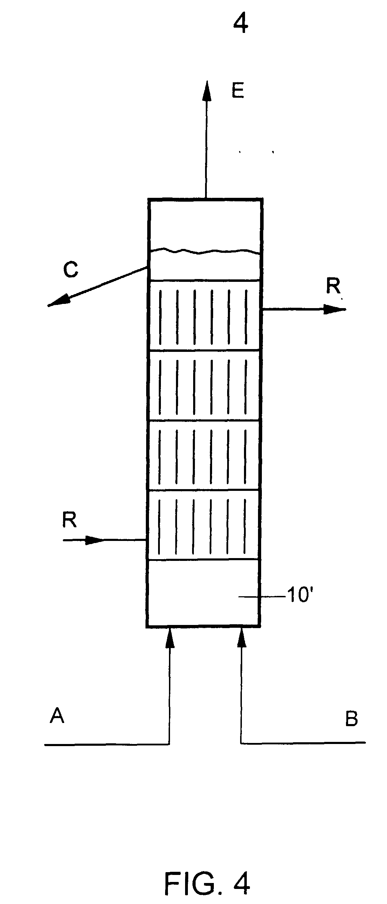

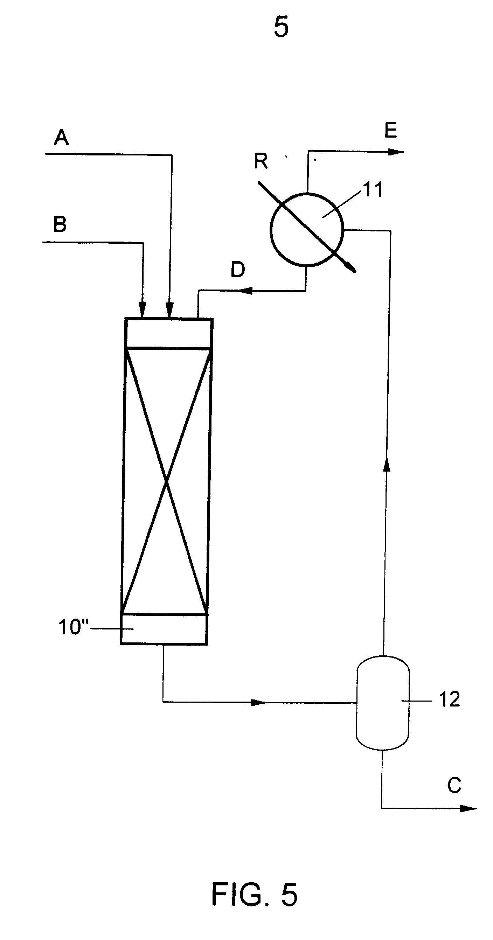

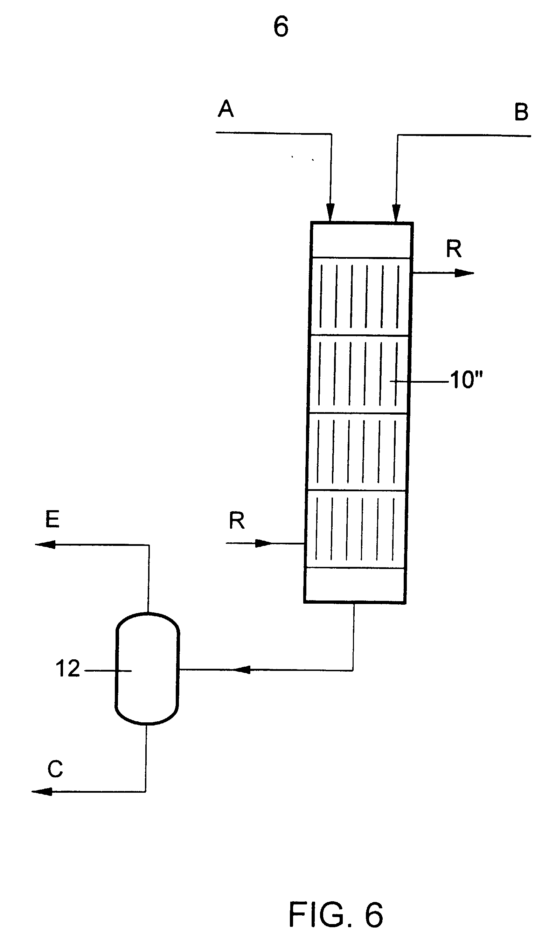

La solution (C) de LiPF₆ dans l'HF obtenue en tête de la colonne 10' fait ensuite l'objet d'un traitement consistant à éliminer l'HF par évaporation afin de cristalliser le LiPF₆, puis à traiter la suspension de cristaux ainsi obtenue afin de complètement purifier le produit fini.
- Une quatrième configuration réactionnelle, illustrée sur la Figure 4, correspond à la variante isotherme du cas précédent : la colonne 10' est refroidie par quelque moyen que ce soit, afin d'absorber l'exothermicité de la réaction, évitant ainsi l'installation d'un condenseur de tête. Cette configuration peut s'éloigner du réacteur piston si l'on fait usage d'échangeurs internes: elle n'en demeure pas moins une configuration co-courant qui entre dans le cadre de l'invention, car elle permet de résoudre parfaitement bien tous les problèmes posés.
- Une cinquième configuration réactionnelle, illustrée sur la Figure 5, correspond à une colonne 10" également à co-courant, mais dans laquelle les alimentations (A) et (B) sont réalisées en tête.

Ce cas de figure est particulièrement performant si l'on s'arrange pour que le flux liquide (B) descendant entraîne le gaz (A) vers le bas : cela permet en effet de conserver un caractère piston à ce réacteur tout en lui conférant un degré d'agitation radial très élevé, qui est favorable aux transferts gaz/liquide, donc à la réaction de fabrication de LiPF₆. A la base de la colonne 10", un pot de désengagement 12 permet de séparer la phase gaz HCI + HF (+ PF₅ en excès) de la phase liquide recherchée (C) : LiPF₆ dans l'HF. Un condenseur 11 parcouru par un réfrigérant (R) reçoit cette phase gaz pour rétrograder l'HF (flux D) en tête de la colonne 10", l'évent (E) étant formé comme précédemment.

Concernant les conditions opératoires, les mêmes recommandations que celles mentionnées pour les configurations réactionnelles précédentes s'appliquent également ici.
- La variante isotherme au cas précédent s'applique également à l'invention et est représentée sur la Figue 6 ; les mêmes recommandations opératoires restent aussi valables.

Les exemples suivants illustrent la présente invention sans toutefois en limiter la portée. Dans ces exemples, sont utilisées les formules suivantes :

| | |
|---|---|
| LiPF₆ = | hexafluorophosphate de lithium |
| LiF = | fluorure de lithium |
| PF₅ = | pentaflurorure de phosphore |
| HF = | acide fluorhydrique |
| HCI = | acide chlorhydrique |
| PCl₃ = | trichlorure de phosphore |
| PCl₅ = | pentachlorure de phosphore. |

### Exemple 1

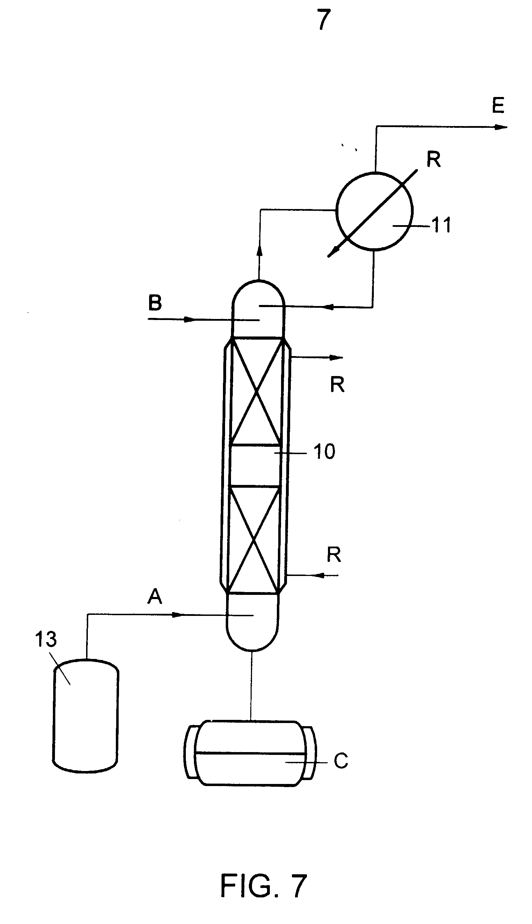

On opère selon le mode de réalisation schématisé sur la Figure 1, dans un montage tel que représenté sur la Figure 7.

Dans une colonne garnie 10 dont le nombre d'étages théoriques a été estimé aux alentours de quatre, on alimente pendant une heure les flux suivants :
• En pied, on introduit un mélange gazeux (A) résultant de la réaction de fabrication de PF₅ à partir de PCl₃, de chlore et d'HF. Ce mélange réactionnel se trouve stocké dans un autoclave 13, sous pression autogène à la température ambiante ; il a la composition suivante :

| | |
|---|---|
| PF₅ = | 11,1% molaire |
| HCI = | 55,7% molaire |
| HF non transformé = | 25,3% molaire |
| Cl₂ non transformé = | 7,9% molaire |

Le débit horaire total est de 10,770 moles/h, c'est-à-dire 484,44 g/h, dont 151,2 g/h de PF₅ (c'est-à-dire 1,2 mole/h).
• En tête, on alimente une solution (B) de LiF dans l'HF ayant la composition suivante :

| | |
|---|---|
| LiF = | 1,9% en poids |
| HF = | 98,1% en poids |

Le débit total est de 123,570 moles/h, c'est-à-dire 2 482,16 g/h, dont 46,6 g/h de LiF (c'est-à-dire 1,794 mole/h).
Le rapport molaire LiF/PF₅ est donc voisin de 1,5.
La colonne 10 est maintenue à 0°C, à l'aide d'une double-enveloppe parcourue par un réfrigérant (R), et elle est en outre équipée d'un condenseur en tête 11, lui aussi parcouru par du réfrigérant (R).

### Résultats :

• La colonne 10 a fonctionné de façon très stable, sans aucun bouchage, ni accumulation de solide pendant toute la durée de l'expérience.
• L'analyse du gaz de tête (E) montre la quasi-absence de phosphore: seulement 0,012 mole/h, soit un rendement en phosphore de 99%. Le gaz de tête (E) ne contient que de l'HCl entraînant de l'HF.
• On recueille en pied une solution (C) contenant le LiPF₆ et le LiF non transformé dans l'HF.
Après élimination de l'HF par évaporation, on recueille un solide que l'on analyse, et pour lequel on trouve la composition pondérale suivante :

| | |
|---|---|
| HF = | 3,2 % |
| LiPF₆ = | 89,3 % |
| LiF = | 7,5% |

Ce solide peut ensuite faire l'objet d'un traitement spécifique pour éliminer l'HF excédentaire.

### Exemple 2

On utilise le montage de la Figure 7. Dans la colonne 10, on alimente, également pendant une heure, les flux suivants :
• En pied, le même PF₅ brut (A) que dans l'Exemple 1, et avec le même débit. En pratique, on alimente en réalité 484 g/h contenant 151 g/h de PF₅.
• En tête, on alimente une solution (B) de LiF dans l'HF ayant la composition suivante :

| | |
|---|---|
| LiF = | 3,9 % en poids |
| HF = | 96,1 % en poids |

Le débit total est divisé par deux par rapport à l'Exemple 1, ce qui fait qu'on alimente en réalité 1.220 g/h, contenant 47,1 g/h de LiF (1,811 mole/h). Le rapport molaire LiF/PF₅ est donc également voisin de 1,5.
La colonne 10 est également maintenue à 0°C à la fois par sa double-enveloppe et par son condenseur 11.

### Résultats :

• Malgré la plus forte concentration en LiF dans l'alimentation liquide, on n'observe aucun bouchage, ni aucune accumulation de solide dans la colonne 10, qui fonctionne sans interruption pendant toute la durée de l'expérience.
• L'analyse du gaz de tête (E) révèle également la présence de seulement 0,012 mole/h de phosphore, ce qui conduit à un rendement en phosphore de 99%.
• On recueille en pied une solution (C) contenant le LiPF₆ et le LiF non transformé dans l'HF. Après élimination de l'HF par évaporation, on recueille un solide que l'on analyse, et pour lequel on trouve une composition pondérale suivante :

| | |
|---|---|
| HF = | 1,6 % |
| LiPF₆ = | 90,9 % |
| LiF = | 7,4% |

Ce solide peut ensuite faire l'objet d'un traitement spécifique pour éliminer l'HF excédentaire.

### Exemple 3

On utilise le montage de la Figure 7. Dans la colonne 10, on alimente, également pendant une heure, les flux suivants :
• En pied, un PF₅ brut ayant une composition similaire à celle des exemples précédents, à savoir :

| | |
|---|---|
| PF₅ = | 11,7% molaire |
| HCI = | 58,4% molaire |
| HF non transformé = | 27,7% molaire |
| Cl₂ non transformé = | 2,2% molaire |

Le débit horaire total est de 16,923 moles/h, c'est-à-dire 730,4 g/h, dont 249,48 g/h de PF₅ (c'est-à-dire 1,980 mole/h).
• En tête, on alimente une solution (B) de LiF dans l'HF ayant la composition suivante :

| | |
|---|---|
| LiF = | 2 % en poids |
| HF = | 98 % en poids |

Le débit total est de 116,46 moles/h, c'est-à-dire 2.340 g/h, dont 46,8 g/h LiF (c'est-à-dire 1,8 mole/h).
Le rapport molaire LiF/PF₅ est ici voisin de 0,909, c'est-à-dire que l'on a un excès molaire de 10% de PF5.
La colonne 10 est également maintenue à 0°C à la fois par sa double-enveloppe et par son condenseur 11.

### Résultats :

• La colonne 10 a fonctionné de façon stable sans aucun bouchage ni accumulation de solide pendant toute la durée de l'expérience.
• Malgré la marche à plus fort débit gazeux et en excès de PF5, le gaz de tête (E), essentiellement constitué d'HCI et d'HF, n'entraîne que 0,200 mole/h de phosphore, ce qui conduit à un rendement phosphore de 89% (10% d'excès + 1% de pertes).
• On recueille, en pied, une solution (C) contenant le LiPF6 dans l'HF.
Après élimination de l'HF par évaporation, on recueille un solide que l'on analyse, et pour lequel on trouve une composition pondérale suivante :

| | |
|---|---|
| HF = | 1,8 % |
| LiPF₆ = | 98,2 % |
| LiF = | traces |

Ce solide peut ensuite faire l'objet d'un traitement spécifique pour éliminer l'HF excédentaire.

### Exemple 4 (comparatif)

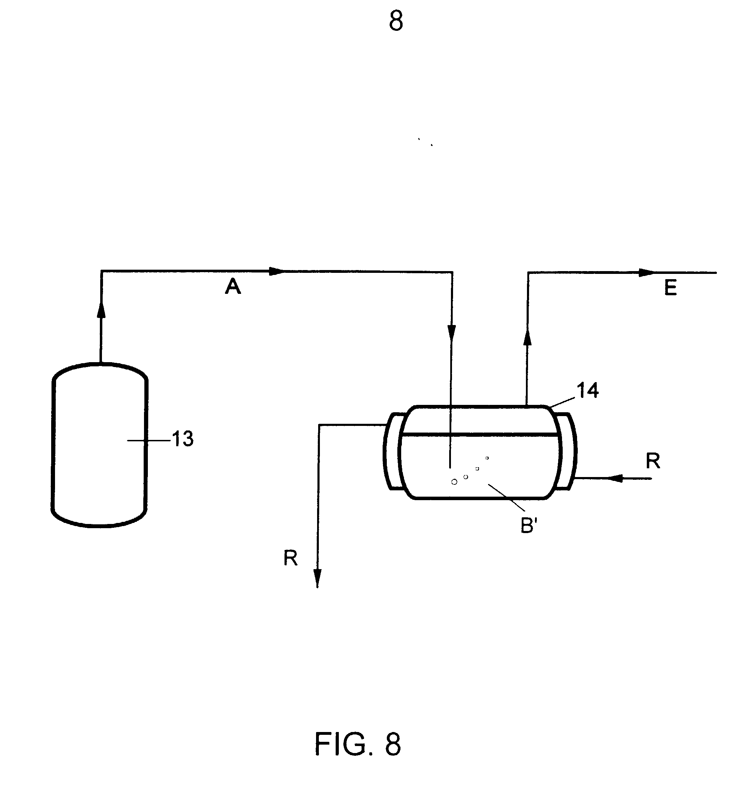

On utilise le montage représenté sur le Figure 8. Dans un récipient 14 équipé d'une double enveloppe parcourue par un réfrigérant (R), on maintient aux alentours de 0°C une solution (B') constituée de 550 mmoles de LiF et de 19.400 mmoles d'HF, c'est-à-dire titrant 3,55 % en poids de LiF.

Dans cette solution, on tente de faire barboter un PF₅ brut (A) issu de la réaction du PCl₃ avec du chlore et de l'HF ; ce mélange gazeux, maintenu dans un autoclave 13 à la pression autogène à 20°C, a la composition suivante :

| | |
|---|---|
| PF₅ = | 4,6% molaire |
| HCI = | 23,2% molaire |
| HF non transformé = | 70,9% molaire |
| Cl₂ non transformé = | 1,3% molaire |

Sur une période de temps assez longue (en raison des bouchages observés), on parvient à alimenter un flux total de 12.956 mmoles de ce gaz : cela revient à alimenter 600 mmoles de PF₅, ce qui correspond à un rapport PF₅/LiF = 1,08.

### Résultats :

• On observe de très nombreux bouchages de la canne plongeant dans la solution LiF + HF : une trentaine sur la période de l'essai.
• A l'issue de l'essai, on observe du produit non transformé correspondant à un rendement en phosphore voisin de 93%.
• Le solide obtenu après évaporation de l'HF de la solution contenue dans le récipient 14 avait la composition pondérale suivante :

| | |
|---|---|
| HF = | 2 % |
| LiPF₆ = | 98 % |
| LiF = | traces |

L'évent (E) est constitué par les composés suivants :.

| | |
|---|---|
| PF₅ non transformé = | 0,7 % molaire |
| HCI = | 46,7 % molaire |
| HF non transformé = | 2,6 % molaire |
| Cl₂ non transformé = | 50, 0% molaire |

Cet essai démontre que la mise en contact entre PF₅ et LiF nécessite des précautions permettant à la fois de toujours maintenir, même localement, une teneur en HF suffisante pour éviter les bouchages d'une part, et un nombre d'unités de transfert suffisant pour atteindre un bon rendement de transformation des réactifs, d'autre part.

## Revendications

1. Procédé de fabrication de l'hexafluorophosphate de lithium, par réaction du pentafluorure de phosphore avec le fluorure de lithium, caractérisé par le fait que l'on met en contact, d'une part, (A) du pentafluorure de phosphore gazeux ou un mélange gazeux comprenant du pentafluorure de phosphore et de l'acide chlorhydrique, et, d'autre part, (B) une solution de fluorure de lithium dans l'acide fluorhydrique, dans une colonne (10 ; 10'; 10") présentant un nombre d'unités de transfert suffisant pour réaliser la réaction du pentafluorure de phosphore avec le fluorure de lithium dans les conditions choisies de température, de pression et de rapport molaire des deux réactifs en présence, et avec absorption totale ou sensiblement totale du pentafluorure de phosphore au sein de la colonne.

2. Procédé selon la revendication 1, caractérisé par le fait que le rapport molaire alimenté pentafluorure de phosphore / fluorure de lithium est compris entre 0,6 et 1,2, et de préférence entre 1,05 et 1,15.

3. Procédé selon l'une des revendications 1 et 2, caractérisé par le fait que la teneur en fluorure de lithium dans sa solution dans l'acide fluorhydrique d'alimentation (B) est choisie pour que la concentration en acide fluorhydrique en tout point de la colonne (10 ; 10'; 10") se situe au-dessus du seuil de solubilité des sels fluorure de lithium et hexafluorophosphate de lithium, en tenant par ailleurs compte de la vaporisation d'une fraction de l'acide fluorhydrique par l'énergie dégagée par la réaction.

4. Procédé selon la revendication 3, caractérisé par le fait que la teneur pondérale en fluorure de lithium en solution dans l'acide fluorhydrique d'alimentation (B) est comprise entre 2 et 6 %, et de préférence entre 3 et 5 %.

5. Procédé selon l'une des revendications 1 à 4, caractérisé par le fait que l'on conduit la réaction à une pression comprise entre la pression atmosphérique et 3 MPa, et de préférence entre la pression atmosphérique et 2 MPa.

6. Procédé selon l'une des revendications 1 à 5, caractérisé par le fait que l'on conduit la réaction à une température comprise entre -20 et 70°C, et de préférence entre -10 et 40 °C.

7. Procédé selon l'une des revendications 1 à 6, caractérisé par le fait que l'on conduit la réaction dans des conditions adiabatiques, la colonne (10 ; 10'; 10") étant alors surmontée d'un condenseur (11) destiné à recondenser et à rétrograder (selon flux D) la partie de l'acide fluorhydrique vaporisée dans ladite colonne par suite de l'exothermicité de la réaction entre le pentafluorure de phosphore et le fluorure de lithium.

8. Procédé selon l'une des revendications 1 à 6, caractérisé par le fait que l'on conduit la réaction dans des conditions isothermes, la colonne (10 ; 10' ; 10") étant alors refroidie pour absorber l'exothermicité de la réaction.

9. Procédé selon l'une des revendications 1 à 8, caractérisé par le fait que l'on alimente la colonne (10) à contre-courant, le courant gazeux (A) constitué par ou contenant le pentafluorure de phosphore étant introduit en pied de colonne et la solution de fluorure de lithium dans l'acide fluorhydrique (B) étant introduite en tête, l'hexafluorophosphate de lithium quittant la colonne en pied en solution dans l'acide fluorhydrique (flux C).

10. Procédé selon l'une des revendications 1 à 8, caractérisé par le fait que l'on alimente la colonne (10') à co-courant, le courant gazeux (A) constitué par ou contenant le pentafluorure de phosphore et la solution de fluorure de lithium dans l'acide fluorhydrique (B) étant introduits à la base de la colonne, laquelle fonctionne alors comme un réacteur-piston, la solution liquide obtenue (C) d'hexafluorophosphate de lithium dans l'acide fluorhydrique étant séparée en tête de la colonne.

11. Procédé selon l'une des revendications 1 à 8, caractérisé par le fait que l'on alimente la colonne (10") à co-courant, le courant gazeux (A) constitué par ou contenant le pentafluorure de phosphore et la solution de fluorure de lithium dans l'acide fluorhydrique (B) étant introduits en tête de colonne, la solution liquide obtenue (C) d'hexafluorophosphate de lithium dans l'acide fluorhydrique étant séparée dans un pot de désengagement (12) monté sur la conduite de soutirage à la base de ladite colonne.

12. Procédé selon l'une des revendications 1 à 11, caractérisé par le fait que l'on part d'un mélange gazeux obtenu comme produit brut de la fabrication de pentafluorure de phosphore à partir de trichlorure de phosphore ou de pentachlorure de phosphore et contenant en conséquence de l'acide chlorhydrique, du chlore et de l'acide fluorhydrique, l'acide chlorhydrique s'échappant alors dans l'évent (E), totalement ou sensiblement totalement débarrassé du pentafluorure de phosphore.

13. Procédé selon l'une des revendications 1 à 12, caractérisé par le fait que l'on soumet à une évaporation la solution obtenue (C) d'hexafluorophosphate de lithium dans l'acide fluorhydrique, afin de cristalliser l'hexafluorophosphate de lithium, puis qu'on traite la suspension de cristaux ainsi obtenue afin de purifier complètement le produit fini.

14. Procédé selon l'une des revendications 1 à 13, caractérisé par le fait que la colonne (10 ; 10' ; 10") est une colonne d'absorption vide, à garnissage ou à plateaux.

15. Procédé selon l'une des revendications 1 à 14, caractérisé par le fait qu'il est conduit en continu.
